# EUROPÄISCHE PATENTSCHRIFT

(11) **EP 0 949 114 B1**
(45) Veröffentlichungstag und Bekanntmachung des Hinweises auf die Patenterteilung: **15.10.2003**
(21) Anmeldenummer: 99250085.0
(22) Anmeldetag: 19.03.1999
(51) Int. Cl.: B60N 2/34

(54) **Fahrzeugsitz oder -bank mit in Schlafstellung klappbarer Rückenlehne**
Vehicle seat or bench with into sleep position tiltable backrest
Siège ou banquette de véhicule à dossier rabattable vers une position de couchette

(30) Priorität: 04.04.1998 DE 19815163
(43) Veröffentlichungstag der Anmeldung: 13.10.1999
(73) Patentinhaber: Faurecia Autositze GmbH & Co. KG, 31655 Stadthagen (DE)
(72) Erfinder: Behrens, Meinhard, 31683 Obernkirchen (DE); Klindworth, Jan, 80538 München (DE)
(74) Vertreter: Seewald, Jürgen, Dipl.-Ing.

(56) Entgegenhaltungen:
- DE-A- 19 514 380
- DE-C- 19 607 060
- DE-U- 9 204 215
- US-A- 2 926 948
- US-A- 3 171 684
- US-A- 4 444 431

## Beschreibung

Die vorliegende Erfindung betrifft einen Fahrzeugsitz oder eine Fahrzeugbank mit in Schlafstellung klappbarer Rückenlehne, wobei die Rückenlehne und das Sitzkissen derart mechanisch miteinander gekoppelt sind, daß die klappende Rückenlehne das Sitzkissen in eine mit ihr in Schlafstellung im wesentlichen bündige Position verlagert.

Aus DE 32 22 273 A1 ist ein Verriegelungsmechanismus für einen Fahrzeugsitz bekannt. Das Sitzteil dieses Fahrzeugsitzes stützt sich an seinem vorderen Ende über beidseitig vorgesehene Arme am Fahrzeugboden ab. Diese Arme besitzen jeweils einen vertikal angeordneten Schlitz, in dem ein sitzteilfester Stift geführt ist. Dieser Stift wird durch eine schwenkbar am Arm gelagerte Klinke in einer oberen Position gehalten. Die Klinken sind jeweils durch eine Zugfeder auf ihre Schließstellung vorgespannt und über einen Draht mit der Rückenlehne verbunden. Beim Zurückklappen der Rückenlehne wird Zug auf den Draht ausgeübt, der die Klinken verschwenkt, so daß die Stifte frei kommen und in den Schlitzen der Arme nach unten gleiten können. Dadurch wird das Sitzteil entweder durch Eigengewicht oder durch Druck von oben an seinem vorderen Ende in eine abgesenkte Position überführt. In dieser Position schließt das Sitzteil im wesentlichen bündig an die vollständig zurückgeklappte Rückenlehne an.

Nachteilig an dieser Lösung ist, daß der erforderliche Verriegelungsmechanismus recht kompliziert aufgebaut ist und das Sitzteil nicht zwangsläufig, d.h., direkt durch das Klappen der Rückenlehne, abgesenkt wird, sondern unter Schwerkraft bzw. durch Einwirken zusätzlicher äußerer Kräfte.

In DE 92 04 215 U1 ist eine Klappsitzbank für Wohnmobile beschrieben. Diese Bank besitzt ein kastenförmiges Sitzteil (Sitzgestell), welches, wie in Wohnmobilen üblich, als Stauraum nutzbar ist. Das Rückenlehnengestell ist im Sitzgestell bis zum Fahrzeugboden geführt und dort an einem unteren Träger des Sitzgestells arretiert. Dabei stützt sich das Rückenlehnengestell an der Rückwand des Sitzgestells ab. An den unteren, beidseitig vorgesehenen Trägern des Sitzgestells ist jeweils das untere Ende eines ersten Lenkers drehgelenkig angeschlagen, während die oberen Enden dieser Lenker jeweils drehgelenkig mit dem Rückenlehnengestell verbunden sind. Darüber hinaus sind zwei weitere Lenker vorgesehen, an deren oberen Enden das Sitzkissen befestigt ist und deren untere Enden drehgelenkig an das Rückenlehnengestell angeschlagen sind. Nach dem Lösen der Arretierung des Rückenlehnengestells, kann dieses zusammen mit den Lenkern nach vorn geschwenkt werden. Dadurch verschiebt sich gleichzeitig das Sitzkissen nach vorn. Am Ende dieser Bewegung des Rückenlehnengestells, bei der dieses gleichzeitig oder anschließend um seine Drehgelenke mit den ersten Lenkern nach hinten geklappt wird, bildet deren Polsterung zusammen mit dem Sitzkissen eine im wesentlichen ebene Liegefläche. Die Kinematik des Bewegungssystems - Rückenlehnengestell, erste und zweite Lenker - ist nicht zwangsläufig, so daß diese Klappsitzbank nicht bedienungsfreundlich ist.

Aufgabe der vorliegenden Erfindung ist es, einen Fahrzeugsitz bzw. eine Fahrzeugbank gattungsgemäßer Art zur Verfügung zu stellen, der bzw. die eine einfache und bedienungsfreundliche Mechanik zur Erreichung der gewünschten Schlafstellung aufweist.

Gelöst wird diese Aufgabe durch einen Fahrzeugsitz bzw. eine Fahrzeugbank mit den Merkmalen des Anspruchs 1 oder Anspruchs 2.

Die erfindungsgemäße Mechanik besteht also lediglich aus den wenigstens zwei, Rückenlehne und Sitzkissen verbindenden Koppelelementen sowie den vorderen Lenkern des Sitzkissens. Sie gewährleistet, daß das Sitzkissen allein durch das Zurückklappen der Rückenlehne mit eindeutiger Kinematik in eine Position verfährt, in der sie mit der umgeklappten Rückenlehne eine im wesentlichen ebene und lückenlose Schlaffläche bildet.

Eine bevorzugte Weiterbildung der Erfindung ergibt sich aus dem Unteranspruch.

Die Erfindung wird nachstehend anhand von Ausführungsbeispielen näher erläutert. In der dazugehörigen Zeichnung zeigt:
- Fig. 1: eine Fahrzeugsitzbank in schematischer Seitenansicht mit in Sitzstellung befindlicher Rückenlehne in einer ersten Ausführungsform,
- Fig. 2: eine Ansicht gemäß Fig. 1 mit in Schlafstellung befindlicher Rückenlehne,
- Fig. 3: eine Ansicht gemäß Fig. 1 mit vorgeklappter Rückenlehne,
- Fig. 4: eine Fahrzeugsitzbank in schematischer Seitenansicht mit in Sitzstellung befindlicher Rückenlehne in einer zweiten Ausführungsform und
- Fig. 5: eine Ansicht gemäß Fig. 4 mit in Schlafstellung befindlicher Rückenlehne.

Die in der Zeichnung dargestellte Sitzbank für einen sogenannten VAN oder für einen Kleinbus besteht aus einem Sitzkissen 1 und einer Rückenlehne 2 mit Kopfstütze 11. Das Sitzkissen 1 ist nach unten durch eine Wanne 3 abgedeckt. An dieser Stelle sei bemerkt, daß im Sinne der vorliegenden Erfindung unter dem Begriff "Sitzkissen" nicht nur die Polsterung, sondern auch die diese tragende Unterkonstruktion gemeint ist.

Die Sitzbank erstreckt sich von Seitenwand zu Seitenwand des Fahrzeuges und ist an diesen gehaltert. Dazu sind beidseitig drei Befestigungspunkte 4, 5 und 6 vorgesehen, die in den Figuren symbolisch durch Kreise dargestellt sind. Bei diesen Befestigungspunkten 4, 5 und 6 handelt es sich um Rastverbindungen, so daß nach dem Lösen dieser Verrastungen mit den Fahrzeugseitenwänden die Sitzbank nach vorn oder hinten verlagert werden kann. Werden nur die beiden Befestigungspunkte 6 gelöst, kann die Rückenlehne 2 um ihre Klappachse 7 nach hinten oder nach vorn geklappt werden.

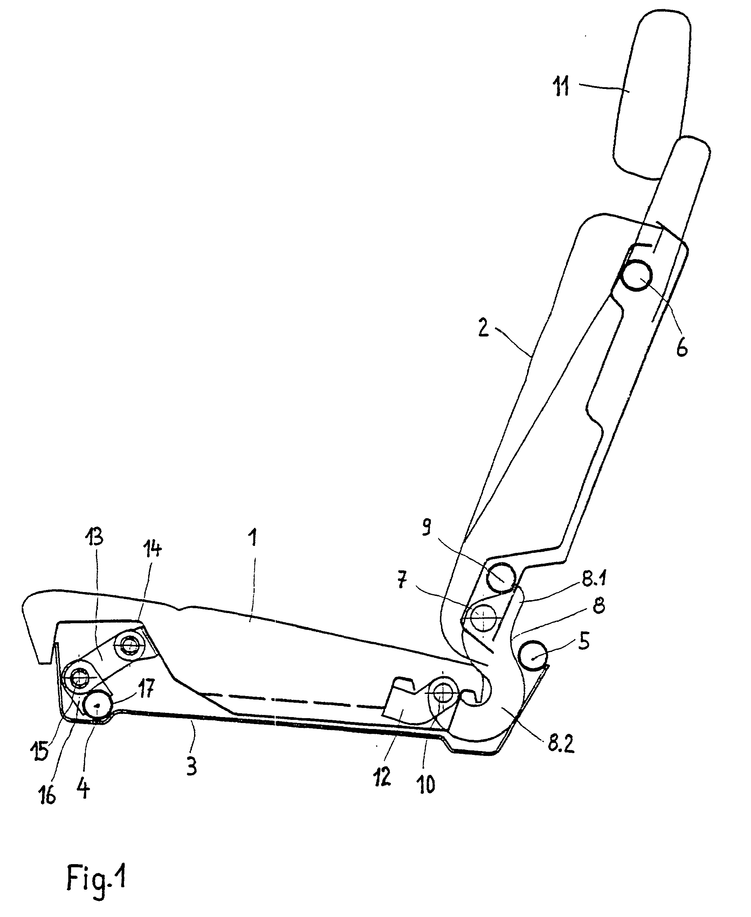

Die oben stehenden Ausführungen gelten für beide Ausführungsbeispiele. Nachstehend wird zunächst das Ausführungsbeispiel gemäß den Figuren 1 bis 3 erläutert.

Auf der Klappachse 7 der Rückenlehne 2 sind über die Breite der Sitzbank verteilt wenigstens zwei im Abstand voneinander angeordnete Koppelelemente 8 schwenkbar gelagert, die, bezogen auf die Sitzstellung, einen von der Klappachse 7 sich nach oben erstreckenden Arm 8.1 und einen sich nach unten erstreckenden Arm 8.2 besitzen. Der obere Arm 8.1 liegt in Sitzstellung an einem lehnenfesten Anschlag 9 an, während der untere Arm 8.2 das Sitzkissen 1 von hinten und unten hintergreift. Er ist dazu hakenförmig ausgebildet. Am Ende dieses Arms 8.2 ist ein Drehgelenk 10 vorgesehen, über das das Koppelelement 8 mit dem Ende eines sitzkissenfesten Hebels 12 verbunden ist. An seinem vorderen Ende ist das Sitzkissen 1 durch wenigstens zwei auf die Breite der Sitzbank bezogen im Abstand voneinander angeordnete Lenker 13 geführt. Diese Lenker 13 weisen an ihrem einen Ende ein sitzkissenfestes Drehgelenk 14 und an ihrem anderen Ende ein chassisfestes Drehgelenk 15 auf. Dabei ist das Drehgelenk 15 an einem Stegblech 16 ausgebildet, welches an einem drehfesten Querrohr 17 angeschweißt ist, an dessen Enden die mit den Seitenwänden des Fahrzeugs verrastbaren Befestigungspunkte 4 ausgebildet sind.

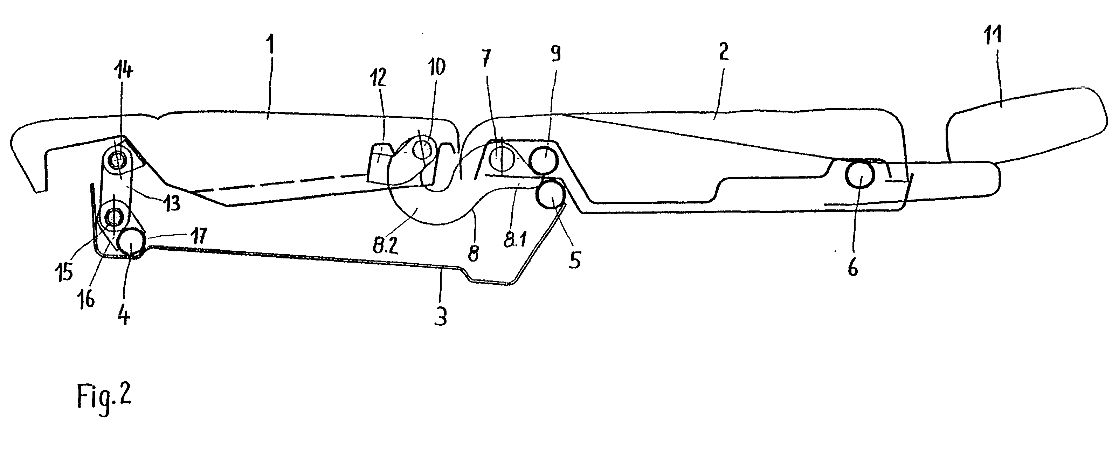

Um die Rückenlehne 2 klappen zu können, muß, wie weiter oben schon erwähnt, in den Befestigungspunkten 6 die Arretierung an den Fahrzeugseitenwänden gelöst werden. Beim Zurückklappen der Rückenlehne 2 werden die Koppelelemente 8 durch den an ihrem oberen Arm 8.1 anliegenden Anschlag 9 mitgenommen, d.h., die Koppelelemente 8 schwenken gemeinsam mit der Rückenlehne 2 im Uhrzeigersinn um die Klappachse 7. Dadurch vollführt das Drehgelenk 10 einen Kreisbogen um die Klappachse 7, d.h., das Sitzkissen 1 wird nach oben und vorn verlagert, da die Lenker 13 diese Bewegung durch das starre Sitzkissen 1 aufnehmen. Am Ende des Klappvorganges bilden die Rückenlehne 2 und Sitzkissen 1 eine im wesentlichen ebene und lückenlose Schlaffläche, wie aus Fig. 2 hervorgeht. Um diese Stellung zu sichern, kann in den Befestigungspunkten 6 wieder eine Verrastung mit den Fahrzeugseitenwänden hergestellt werden.

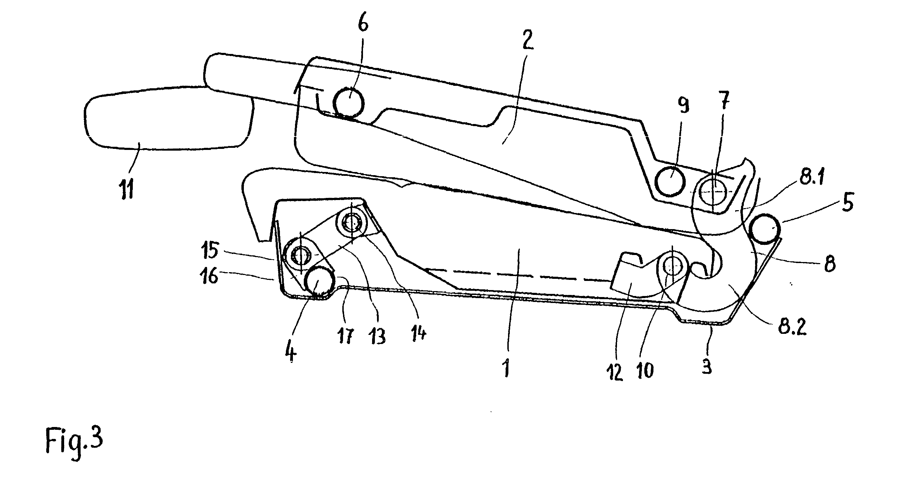

Beim Nachvornklappen der Rückenlehne 2 kommen die Anschläge 9 von den Koppelelementen 8 frei, d.h., diese und damit auch das Sitzkissen 1 bleiben bei diesem Klappvorgang in ihrer Sitzposition (Fig. 3).

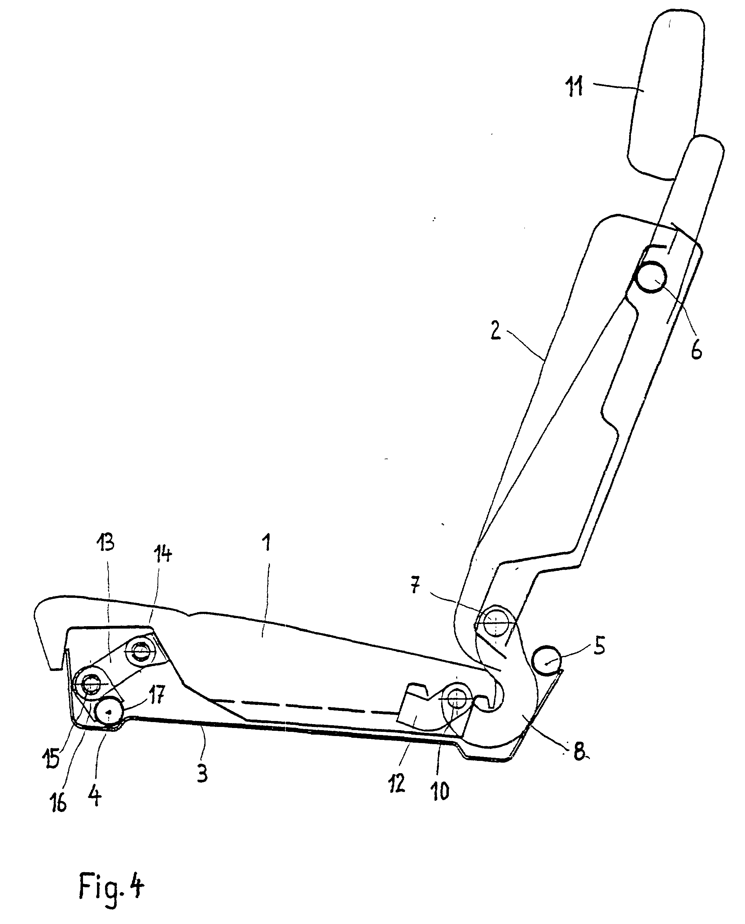

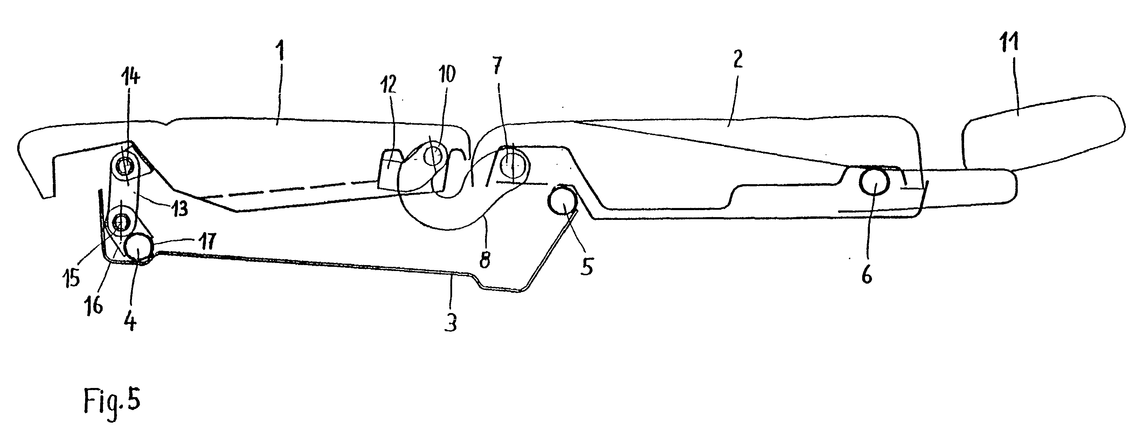

In den Figuren 4 und 5 ist ein weiteres Ausführungsbeispiel dargestellt. Es unterscheidet sich von dem ersten Ausführungsbeispiel lediglich dadurch, daß die Koppelelemente 8 nicht schwenkbar auf der Klappachse 7 gelagert sind, sondern drehfest auf dieser sitzen. Bei dieser Ausbildung sind die lehnenfesten Anschläge 9 sowie der Arm 8.1 der Koppelelemente 8 nicht mehr erforderlich, da die Koppelelemente 8 aufgrund ihrer drehfesten Anordnung auf der Klappachse 7 beim Zurückklappen der Rückenlehne 2 mitgenommen werden. Allerdings kann die Rückenlehne 2 bei dieser Ausführungsform nicht nach vorn geklappt werden, was nicht nachteilig sein muß, da in vielen Anwendungsfällen eine derartige Klappbewegung der Rückenlehne 2 nicht erforderlich ist.

## Patentansprüche

1. Fahrzeugsitz oder -bank mit in Schlafstellung klappbarer Rückenlehne, wobei die Rückenlehne (2) und das Sitzkissen (1) derart mechanisch miteinander gekoppelt sind, daß die klappende Rückenlehne (2) das Sitzkissen (1) in eine mit ihr in Schlafstellung im wesentlichen bündige Position verlagert, **dadurch gekennzeichnet, daß** auf der Klappachse (7) der Rückenlehne (2) wenigstens ein sich beidseitig diametral von der Klappachse (7) erstreckendes, starres Koppelelement (8) schwenkbar angeordnet ist, wobei der eine Arm (8.2) des Koppelelements (8) das Sitzkissen (1) von hinten und unten hintergreift und an dessen hinteres Ende drehgelenkig angeschlagen ist, während das vordere Ende des Sitzkissens (1) über Lenker (13) drehgelenkig und chassisfest abgestützt ist, und der andere Arm (8.1) des Koppelelements (8) an einem lehnenfesten Anschlag (9) anliegt, welcher das Koppelelement (8) beim Lehnenklappen mitnimmt und entsprechend um die Klappachse (7) der Rückenlehne (2) verschwenkt.

2. Fahrzeugsitz oder -bank mit in Schlafstellung klappbarer Rückenlehne, wobei die Rückenlehne (2) und das Sitzkissen (1) derart mechanisch miteinander gekoppelt sind, daß die klappende Rückenlehne (2) das Sitzkissen (1) in eine mit ihr in Schlafstellung im wesentlichen bündige Position verlagert, **dadurch gekennzeichnet, daß** auf der Klappachse (7) der Rükkenlehne (2) wenigstens ein starres Koppelelement (8) drehfest angeordnet ist, welches das Sitzkissen (1) von hinten und unten hintergreift und an dessen hinteres Ende drehgelenkig angeschlagen ist, während das vordere Ende des Sitzkissens (1) über Lenker (13) drehgelenkig und chassisfest abgestützt ist.

3. Fahrzeugsitz oder -bank nach Anspruch 1 oder Anspruch 2, **dadurch gekennzeichnet, daß** die Rückenlehne (2) in chassisfesten Punkten (6) sowohl in Sitz- als auch in Schlafstellung beidseitig arretierbar ist.

## Claims

1. Vehicle seat or bench seat with a back rest folding into the sleeping position, with the back rest (2) and the seat cushion (1) mechanically coupled together in such a way that the hinged backrest (2) moves the seat cushion (1 ) into the sleeping position in a fundamentally flush position with itself, **characterised by** the fact that on the hinge axis (7) of the back rest (2) there is at least one rigid coupling element (8), fitted so that it can swivel, extending diametrically from the hinge axis (7) on both sides, whereby an arm (8.2) of the coupling element (8), reaches under the seat cushion (1 ) from below and behind and is fixed at the rear end of this, so that it can swivel, whilst the front end of the seat cushion (1) is supported, so that it can swivel, fixed to the chassis, through connecting rods (13), and the other arm (8.1 ) of the coupling element (8) is resting on a stop (9) which can support the backrest, which takes the coupling element (8) with it when it hinges the back rest and correspondingly swivels the back rest (2) around the hinge axes (7).

2. Vehicle seat or bench seat with a back rest folding into the sleeping position, with the back rest (2) and the seat cushion (1) mechanically coupled together in such a way that the hinged backrest (2) moves the seat cushion (1 ) into the sleeping position in a fundamentally flush position with itself, **characterised by** the fact that on the hinge axis (7) of the back rest (2) there is at least one rigid coupling element (8), fitted so that it can swivel, which reaches under the seat cushion (1 ) from below and behind and is fixed at the rear end of this, so that it can swivel, whilst the front end of the seat cushion (1) is supported, so that it can swivel, fixed to the chassis, through connecting rods (13).

3. Vehicle seat or bench seat in accordance with Claim 1 or Claim 2, **characterised by** the fact that the backrest (2) can be locked on both sides in points fixed to the chassis (6) both in the seating and in the sleeping position

## Revendications

1. Siège ou banquette de véhicule avec dossier pouvant être rabattu en position de couchage, le dossier (2) et le coussin (1) étant couplés mécaniquement l'un à l'autre de manière que le dossier (2), en étant rabattu, déplace le coussin (1) dans une position de couchage, dans lequel il est essentiellement à proximité avec le dossier (2), **caractérisé en ce qu'**au moins un élément de couplage (8) rigide s'étendant diamétralement de part et d'autre de l'axe d'articulation (7) est disposé orientable sur celui-ci, l'un des bras (8.2) de l'élément de couplage (8) passant derrière et sous le coussin (1), à l'extrémité arrière duquel il est monté de manière tournante articulée, alors que l'extrémité avant du coussin (1) est soutenue par l'intermédiaire de bielles (13) de manière tournante articulée tout en étant fixe sur le châssis, l'autre bras (8.1) de l'élément de couplage (8) reposant sur une butée (9), fixe sur l'accoudoir, qui entraîne l'élément de couplage (8) lorsque le dossier est rabattu et le pivote de manière correspondante autour de l'axe d'articulation (7) du dossier (2).

2. Siège ou banquette de véhicule avec dossier pouvant être rabattu en position de couchage, le dossier (2) et le coussin (1) étant couplés mécaniquement l'un à l'autre, de manière que le dossier (2), en étant rabattu, déplace le coussin (1), dans une position de couchage, dans lequel il est essentiellement à proximité avec le dossier (2), **caractérisé en ce qu'**un élément de couplage (8) rigide au moins est disposé, de manière résistante à la torsion, sur l'axe d'articulation (7) du dossier (2), élément de couplage (8), qui passe derrière et sous le coussin (1), à l'extrémité arrière duquel il est monté de manière tournante articulée, alors que l'extrémité avant du coussin (1) est soutenue, par l'intermédiaire de bielles (13), de manière tournante articulée tout en étant fixe sur le châssis.

3. Siège ou banquette de véhicule selon la revendication 1 ou 2, **caractérisé en ce que** le dossier (2) peut être arrêté, des deux côtés, en des points fixes du châssis, aussi bien en position d'assise qu'en position de couchage.
